# EUROPÄISCHE PATENTSCHRIFT

(11) **EP 3 448 656 B1**
(45) Veröffentlichungstag und Bekanntmachung des Hinweises auf die Patenterteilung: **26.02.2020**
(21) Anmeldenummer: 17720758.6
(22) Anmeldetag: 26.04.2017
(51) Int. Cl.: B29C 65/08, B29C 65/74, B29C 65/78, B29C 69/00

(54) **STANZ-SIEGELEINHEIT UND ULTRASCHALLBEARBEITUNGSVORRICHTUNG MIT EINER SOLCHEN**
STAMP-SEALING UNIT AND ULTRASONIC PROCESSING DEVICE COMPRISING SAME
UNITÉ D'ESTAMPAGE-SCELLEMENT ET DISPOSITIF D'USINAGE PAR ULTRASONS POURVU D'UNE TELLE UNITÉ

(30) Priorität: 28.04.2016 DE 102016107958
(43) Veröffentlichungstag der Anmeldung: 06.03.2019
(73) Patentinhaber: Herrmann Ultraschalltechnik GmbH & Co. Kg, 76307 Karlsbad (DE)
(72) Erfinder: AUST, Volker, 75217 Birkenfeld (DE); SCHMID, Andreas, 75175 Pforzheim (DE)
(74) Vertreter: WSL Patentanwälte Partnerschaft mbB
(86) Internationale Anmeldenummer: PCT/EP2017/059869
(87) Internationale Veröffentlichungsnummer: WO 2017/186764

(56) Entgegenhaltungen:
- EP-A1- 1 043 146
- WO-A1-2012/152798
- CH-A5- 687 366
- JP-A- S56 129 130

## Beschreibung

Die vorliegende Erfindung betrifft eine Stanz-Siegeleinheit mit einem als Sonotrode ausgebildeten Stempel und einer Matrize, wobei die Matrize eine Öffnung aufweist und der Stempel in Stanzrichtung in die Öffnung hinein- und aus dieser herausbewegbar ist. Des Weiteren betrifft die vorliegende Erfindung eine Ultraschallbearbeitungsvorrichtung zum Stanzen von Stanzlingen aus Stanzgut und zum Siegeln der Stanzlinge an Rohprodukte.

Es gibt in der Industrie eine Vielzahl von Anwendungen, bei denen ein Stanzling aus einem Stanzgut ausgestanzt wird und dieser in einem weiteren Verarbeitungsschritt an ein Produkt gesiegelt wird.

Beispielsweise werden als Druckausgleichselemente dienende Membrane in elektronische Gehäuse aber auch in Leuchten und Scheinwerfer eingebaut. Diese Druckausgleichselemente ermöglichen einen Druckausgleich, was wiederum zu einer geringeren Belastung von möglicherweise vorhandenen Dichtungen und damit reduzierten Leckagen führt. Insoweit die Membran permeabel ist, kann auch Feuchtigkeit aus dem Gehäuse entweichen.

In der Regel werden die entsprechend ausgestanzten und vorkonfektionierten Membrane über ein Trägerband bereitgestellt und mit dem Produkt, wie z.B. dem Gehäuse, verschweißt bzw. versiegelt. Alternativ können auch mittels Spritzgießen hergestellte Membranelemente gefertigt und mit dem Gehäuse verschraubt bzw. mit diesem verklipst werden.

Kürzlich wurde von der Anmelderin eine Ultraschallbearbeitungsmaschine entwickelt, die in einem Arbeitsgang eine Membran mechanisch aus einem Materialband stanzt und mittels Ultraschall auf ein Kunststoffformteil aufsiegelt. Hierzu wurde eine herkömmliche Ultraschallbearbeitungsvorrichtung verwendet, bei der eine Ultraschallschwingeinheit bestehend aus einer Sonotrode und einem Konverter in einer mittels einer Antriebseinheit betätigbaren Vorschubeinheit gehalten wird. Dabei kann die Sonotrode ggf. über ein Amplitudentransformationsstück mit dem Konverter verbunden sein. Die Vorschubeinheit ist mit einem Gerätegestell verbunden, sodass durch Ansteuern der Antriebseinheit die Position der Ultraschallschwingeinheit relativ zu dem Maschinengestell in einer Richtung hin und her bewegt werden kann. Bei der entwickelten Maschine wurde eine Matrize, die in einer Matrizenplatte aufgenommen worden ist, fest mit dem Maschinengestell verbunden, sodass durch die Bewegung der Ultraschallschwingeinheit die Sonotrode in die Öffnung der Matrize hineinbewegt werden konnte, um die Membran aus dem Membranband auszustanzen.

Der Vorteil dieser Maschine ist es, dass auf die Verwendung von vorgefertigten Membranen, die zunächst auf ein Trägerband appliziert werden müssen, verzichtet werden kann. Stattdessen werden die Membranen unmittelbar vor der Verbindung mit dem Produkt, wie z.B. dem Gehäuse, ausgestanzt.

Allerdings ist es sehr aufwendig, diese Maschine zu justieren, da Stempel und Matrize exakt zueinander ausgerichtet sein müssen. Ein zuverlässiger Stanzvorgang ist nur dann sichergestellt, wenn die Innenkontur der Matrize sich nicht zu sehr von der Außenkontur der Sonotrode unterscheidet.

Es ist daher nicht nur die Matrizenplatte exakt gegenüber dem Gestell auszurichten, sondern darüber hinaus müssen auch erhöhte Anforderungen an die Toleranzen bei der Verbindung zwischen Gestell und Transportschlitten bzw. zwischen Transportschlitten und Ultraschallschwingeinheit erfüllt werden.

Des Weiteren kann es aufgrund der nur einseitigen Halterung der Vorschubeinheit am Gestell zu Verbiegungen gegenüber dem Gestell kommen, die sich durch entsprechende Ausrichtung der Sonotrode nicht mehr kompensieren lassen.

Das Dokument JP S56129130 A zeigt in Fig. 1 eine Vorrichtung zur Halterung und Justierung einer Sonotrode in einem Ultraschallschweißgerät. Die Sonotrode weist in diesem Fall einen Flansch auf, der mittels einer Schraube zwischen einem unteren und einer oberen Haltering verklemmt ist. Der obere Haltering ist ebenfalls mit einer Schraube an einer Sonotrodenplatte befestigt.

Das Dokument EP 1 043 146 A1 stellt eine Methode und eine Vorrichtung zur Anbringung von Strohhalmen an biegsamen Behältnissen mittels Ultraschallschweißtechnik vor. In diesem Dokument ist beispielsweise in den Abbildungen 1 und 2 ebenfalls eine Halterung einer Sonotrode dargestellt.

Das Dokument CH 687366 A5 betrifft eine Vorrichtung zum Ausstanzen eines Fügeteils und zum Verschweißen desselben. In diesem Dokument wird unter anderem eine in einen Schweißstempel mündende Unterdruckleitung vorgestellt, womit ein Verrücken oder Herunterfahren eines gestanzten Fügeteils verhindert werden kann.

Die Ausrichtung der Werkzeuge zueinander und insbesondere die Justierung der Sonotrode stellt bei der Inbetriebnahme eine große Herausforderung dar, so dass hierfür in der Regel ein vom Anlagenhersteller besonders geschulter Fachmann notwendig ist. Eine nicht ausreichende Ausrichtung führt zu erhöhtem Verschleiß an den Werkzeugen sowie zu Störungen des Stanz-SiegelProzesses.

In jedem Fall ist ein Austausch der Matrize bzw. des Sonotrodenstempels, um bspw. die Größe der zu stanzenden und zu verschweißenden Membranen zu ändern, nur mit großem Aufwand möglich, der in der Regel von dem Benutzer der Ultraschallbearbeitungsvorrichtung nicht betrieben werden kann.

Es ist daher die Aufgabe der vorliegenden Erfindung eine Stanzsiegeleinheit anzugeben, die die genannten Probleme zumindest verringert.

Erfindungsgemäß wird dies dadurch erreicht, dass eine Sonotrodenplatte mit einer Sonotrodenplattenöffnung zur Aufnahme der Sonotrode vorgesehen ist, wobei die Sonotrode einen Bund aufweist, und die Sonotrodenplattenöffnung eine Innenkontur mit einer Anschlagsfläche und der Bund eine Außenkontur mit einer Anschlagsfläche hat, wobei die beiden Anschlagsflächen korrespondierend zueinander ausgebildet sind, so dass, wenn die Sonotrode in der Sonotrodenplattenöffnung aufgenommen ist, die Anschlagsflächen aneinander anliegen, wobei die Innenkontur einen Innenkonus und die Außenkontur einen Außenkonus, welcher korrespondierend zu dem Innenkonus ausgebildet ist, aufweist.

Durch diese Maßnahme ist eine leichte Ausrichtung der Sonotrode gegenüber der Sonotrodenplatte möglich. Ist daher die Sonotrodenplatte einmal korrekt positioniert, kann die Sonotrode leicht gegen eine andere Sonotrode ausgetauscht werden. Sobald die korrespondierenden Anschlagsflächen aneinander liegen, ist die Sonotrode korrekt relativ zur Sonotrodenplatte positioniert.

Die konusförmige Außenkontur des Bundes und die dazu korrespondierende Innenkontur der Sonotrodenplatte hat den Vorteil, dass die Ausrichtung der Sonotrode und damit des Stempels relativ zu der Sonotrodenplatte einfach erfolgen kann. Der Bund der Sonotrode muss lediglich in die Öffnung der Sonotrodenplatte eingelegt werden. Aufgrund der korrespondierenden konischen Abschnitte ist die Sonotrode automatisch nahezu exakt gegenüber der Sonotrodenplatte ausgerichtet. Dabei ist des Weiteren eine hohe Rundlaufgenauigkeit und eine hohe Koaxialität von Sonotrodenachse und Außenkonusachse von Vorteil.

Der Bund kann einstückig mit der Sonotrode ausgebildet sein. Alternativ dazu kann der Bund auch getrennt von der Sonotrode gefertigt werden und mit dieser verbunden sein. Zur Befestigung des Bundes an der Sonotrode kann dieser beispielsweise auf diese aufgeschrumpft werden oder mit dieser verlötet oder verschweißt werden.

Beispielsweise kann die Sonotrode rotationssymmetrisch, z.B. mit kreisförmigem Querschnitt, ausgeführt werden und der Bund kann in einer Richtung radial zur Rotationsachse über die Außenfläche der Sonotrode vorstehen und umlaufend ausgeführt sein. Die Sonotrodenplatte hält den Bund, sodass die Sonotrode möglichst frei schwingen kann. Alternativ kann der Stempel auch einen nicht kreisförmigen Querschnitt aufweisen. Alternativ kann der Bund in Umfangsrichtung auch unterbrochen sein.

Ggf. weist der Bund in der Nähe der Außenfläche der Sonotrode einen Abschnitt mit verringerter axialer Ausdehnung auf, um das Schwingverhalten der Sonotrode aufgrund der Befestigung des Bundes an der Sonotrodenplatte möglichst wenig zu beeinflussen. Zudem ist der Bund vorzugsweise in einem Bereich mit der Sonotrode verbunden, in dem bei resonanter Anregung der Sonotrode mit einer Ultraschallschwingung ein Schwingungsminimum der longitudinalen Schwingung liegt.

Zur Befestigung der Sonotrode an der Sonotrodenplatte ist in einer bevorzugten Ausführungsform ein Klemmelement vorgesehen, dass derart angeordnet ist, dass es eine Bewegung der Sonotrode bzw. des Sonotrodenbundes in axialer Richtung (Stanzrichtung) relativ zur Sonotrodenplatte verhindert. Dieses Klemmelement kann bspw. aus einer Hülse mit Kragenelement bestehen, wobei die Hülse innerhalb der Sonotrodenplattenöffnung positioniert ist und das Kragenelement an der Sonotrodenplatte befestigt ist. Die Befestigung an der Sonotrodenplatte kann bspw. mit Hilfe von einer oder mehrerer Schrauben erfolgen. Alternativ kann das Klemmelement auch als Muffe mit Außengewinde ausgebildet sein, welches in ein Innengewinde in der Sonotrodenplatte eingeschraubt werden kann.

In einer weiteren bevorzugten Ausführungsform ist die Matrize an der Matrizenplatte befestigt und die Matrizenplatte weist eine Matrizenplattenöffnung auf, in die die Matrize eingesetzt ist. Bspw. kann die Matrizenplattenöffnung einen Innenkonus und die Matrize einen Außenkonus aufweisen, wobei der Außenkonus der Matrize korrespondierend zu dem Innenkonus der Matrizenplattenöffnung ausgebildet ist. Auch hier kann die Matrize auf einfache Weise relativ zur Matrizenplattenöffnung orientiert werden. Alternativ sind auch nichtkonische korrespondierende Anschlagsflächen möglich. Die Matrize ist vorzugsweise einteilig ausgebildet. Alternativ kann sie auch mehrteilig ausgebildet sein.

In einer bevorzugten Ausführungsform ist eine Matrizenklemmeinheit vorgesehen, welche an der Matrizenplatte vorzugsweise mit einer oder mehreren Schrauben befestigt ist und vorzugsweise zumindest abschnittsweise mit der Matrize in Kontakt steht.

Die Matrizenklemmeinheit kann eine Öffnung aufweisen, die mit der Matrizenöffnung fluchtet, wobei vorzugsweise zwischen Matrizenklemmeinheit und Matrize abschnittsweise ein Spalt zur Zuführung von Stanzgut gebildet wird. Die Matrizenklemmeinheit dient dann auch zur Führung des Stanzgutes.

Um die Herstellung von Sonotrodenplatte und Matrizenplatte zu vereinfachen, können diese aufeinander gelegt, miteinander verschraubt und dann die Öffnungen mit den Innenkonen eingebracht werden. Daher ist es bevorzugt, wenn die Innenkonen der Sonotrodenplatte und der Matrizenplatte sowie die Außenkonen von Sonotrodenbund und Matrize jeweils den gleichen Konuswinkel aufweisen.

In einer weiteren bevorzugten Ausführungsform ist die Sonotrodenplatte über eine Geradführung und vorzugsweise über eine Säulenführung mit der Matrize oder der Matrizenplatte, an der die Matrize befestigt ist, verbunden.

Unter einer Säulenführung wird eine Führung verstanden, die mindestens eine Führungssäule und mindestens eine Führungsbuchse umfasst. Dabei kann die Führungssäule innerhalb der Führungsbuchse gleitend oder wälzend bewegt werden. Beispielsweise kann die Führungssäule an der Matrizenplatte befestigt sein und die Sonotrodenplatte eine Führungsbuchse aufweisen, sodass durch eine Bewegung der Platte relativ zur Führungssäule eine Relativbewegung zwischen Sonotrodenplatte und Matrizenplatte verwirklicht wird.

Dabei kann die Führungsbuchse sowohl als separates Bauteil an der Sonotrodenplatte befestigt sein oder einstückig in die Sonotrodenplatte eingeformt sein.

Mit anderen Worten ist nun die Sonotrodenplatte, welche die Sonotrode hält, und die Matrizenplatte, welche die Matrize hält, direkt miteinander über eine Säulenführung verbunden und nicht, wie im Stand der Technik, über ein Transportschlitten, der wiederum mit dem Maschinengestell verbunden ist.

Alternativ kann die Führungssäule an der Sonotrodenplatte befestigt sein und die Matrizenplatte eine Führungsbuchse aufweisen.

Dadurch kann eine Einrichtung der Einheit, d.h. eine Ausrichtung zwischen Sonotrode und Matrize, sogar außerhalb der Ultraschallbearbeitungsvorrichtung erfolgen.

In einer bevorzugten Ausführungsform weist die Säulenführung mindestens zwei Säulen auf, die mit der Matrizenplatte verschraubt sind. Des Weiteren weist die Sonotrodenplatte Führungsöffnungen zur Aufnahme der Säulen auf, wobei vorzugsweise zwischen den Säulen und den Führungsöffnungen jeweils eine Führungshülse angeordnet ist.

Aufgrund der Säulenführung von Sonotrodenplatte und Matrizenplatte sind diese mit sehr hoher Genauigkeit zueinander ausgerichtet. Die Ausbildung von Matrize und/oder Sonotrodenbund mit Außenkonus kann nun eine präzise Ausrichtung von Matrize bzw. Sonotrodenbund zu Matrizenplatte bzw. Sonotrodenplatte erfolgen.

In einer besonders bevorzugten Ausführungsform weist die Sonotrode einen Fluidkanal mit einem Einlass auf, der an der der Matrize zugewandte Fläche der Sonotrode angeordnet ist. Der Auslass des Fluidkanals ist mit einer Vakuumquelle oder Druckluftquelle verbindbar.

Durch Anlegen eines Vakuums kann die Führung des Stanzlings nach dem Ausstanzen bis zur Siegelposition verbessert werden, da der Stanzling am Stempel gehalten wird. Nach Beendigung des Siegelvorgangs kann der Fluidkanal mit Druckluft beaufschlagt werden, um den gesiegelten Stanzling vom Stempel zu lösen, ohne dass die Gefahr besteht, die Siegelung zu beschädigen.

Des Weiteren betrifft die vorliegende Erfindung eine Ultraschallbearbeitungsvorrichtung zum Stanzen von Stanzlingen aus Stanzgut und zum Siegeln der Stanzlinge an Rohprodukte. Erfindungsgemäß wird eine Stanzsiegeleinheit wie beschrieben verwendet.

Die Ultraschallbearbeitungsvorrichtung weist in einer bevorzugten Ausführungsform ein Gestell auf, an welchem die Matrizenplatte befestigt ist. Des Weiteren ist eine Antriebseinheit vorgesehen, welche an der Sonotrodenplatte angreift und diese relativ zur Matrizenplatte bewegen kann. Zwischen Antriebseinheit und Sonotrodenplatte kann eine Ausgleichskupplung vorgesehen sein, mit der kleinere Abweichung zwischen der Bewegungsrichtung der Antriebseinheit und der Bewegungsrichtung der Säulenführung ausgeglichen werden können. Die Antriebseinheit kann beispielsweise einen Kolben aufweisen, der hydraulisch oder pneumatisch betätigt werden kann. Da sich die von der Sonotrode aufzubringenden Kräfte beim Stanzen und beim Siegeln unterscheiden, kann die Antriebseinheit zwei Kolben mit unterschiedlichen effektiven Querschnitten aufweisen, wobei der eine Kolben zum Aufbringen der Stanzkraft und der andere Kolben zum Aufbringen der Siegelkraft vorgesehen ist.

Alternativ kann die Antriebseinheit einen elektrischen Motor, z. B. einen Servomotor, aufweisen.

In einer weiteren besonders bevorzugten Ausführungsform ist eine Zuführung von Stanzgut und eine Zuführung von Rohprodukten vorgesehen, wobei die Zuführung von Stanzgut und die Zuführung von Rohprodukten auf gegenüberliegenden Seiten der Matrizenplatte angeordnet sind.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
**Figur 1** eine perspektivische Ansicht einer erfindungsgemäßen Stanzsiegeleinheit,
**Figur 2** eine Schnittansicht der Stanzsiegeleinheit von Figur 1,
**Figur 3** eine perspektivische Schnittansicht der Stanzsiegeleinheit von Figur 1,
**Figur 4** eine perspektivische Ansicht einer Ultraschallbearbeitungseinheit mit der Stanzsiegeleinheit der Figuren 1 bis 4,
**Figur 5** eine Seitenansicht einer alternativen Ausführungsform einer Sonotrode einer erfindungsgemäßen Stanzsiegeleinheit und
**Figur 6** eine Schnittansicht der Ausführungsform der Sonotrode von Figur 5.

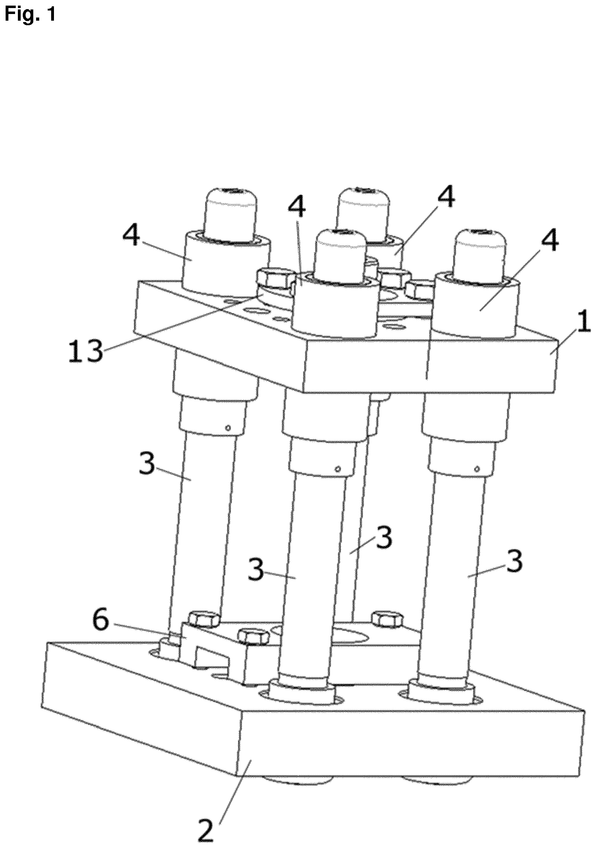

In Figur 1 ist eine Ausführungsform einer erfindungsgemäßen Stanzsiegeleinheit gezeigt. Die Stanzsiegeleinheit weist eine Sonotrodenplatte 1 und eine Matrizenplatte 2 auf. Die beiden Platten sind über eine Säulenführung miteinander verbunden. Die Säulenführung weist vier Führungssäulen 3 auf, die mit der Matrizenplatte 2 verschraubt sind und innerhalb von Führungshülsen 4, die in entsprechenden Bohrungen in der Sonotrodenplatte 1 befestigt sind, beweglich geführt sind. Die Sonotrodenplatte 1 kann dann gegenüber der Matrizenplatte 2 entlang der Führungssäulen 3 hin und her bewegt werden. Über die Säulenführung ist sichergestellt, dass die Sonotrodenplatte 1 und die Matrizenplatte 2 nahezu perfekt parallel zueinander angeordnet sind.

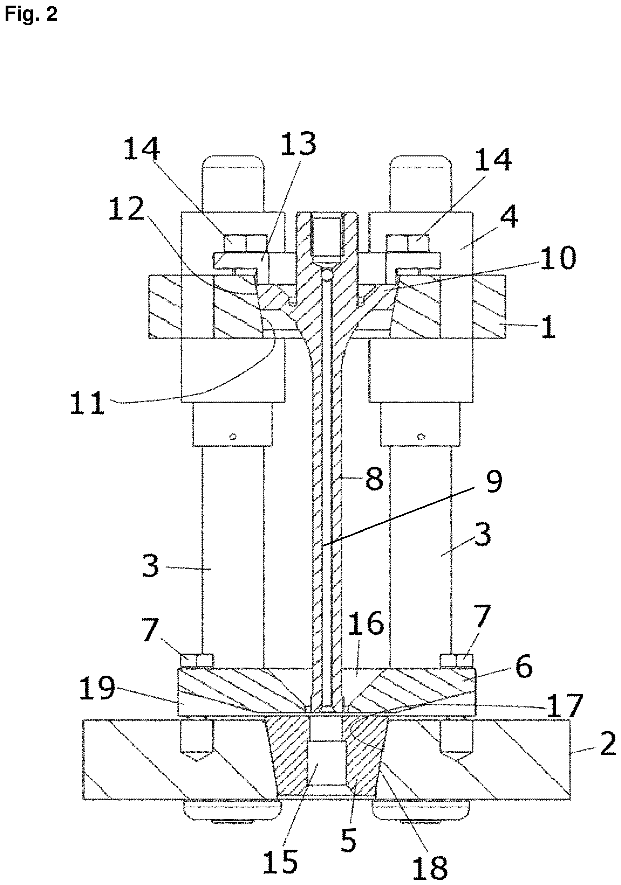

In Figur 2 ist eine entsprechende Schnittansicht dargestellt. Man erkennt, dass in der Mitte zwischen den vier Führungssäulen 3 eine als Stanzstempel ausgebildete Sonotrode 8 angeordnet ist. Die Sonotrode 8 ist rotationssymmetrisch in Bezug auf eine Längsachse ausgebildet und hat im gezeigten Beispiel einen kreisförmigen Querschnitt. Um die Sonotrode 8 an der Sonotrodenplatte 1 zu halten, weist die Sonotrode einen Bund 10 auf, der sich wulstartig radial nach außen erstreckt. Der Bund 10 weist eine konische Außenfläche 12 auf. Die Sonotrodenplatte 1 hat eine Öffnung, in der die Sonotrode 10 eingesetzt ist. Diese Öffnung weist eine konische Innenfläche 11 auf. Der Innenkonus 11 der Sonotrodenplatte 1 und der Außenkonus 12 des Sonotrodenbundes 10 sind korrespondierend zueinander ausgebildet. Dies führt zu einer exakten Ausrichtung der Achse der Sonotrode senkrecht zur Fläche der Sonotrodenplatte. Um eine Bewegung der Sonotrode 8 in Figur 2 nach oben relativ zur Sonotrodenplatte 1 zu verhindern, ist ein Klemmelement 13 vorgesehen. Dieses Klemmelement 13 ist im Wesentlichen hülsenförmig mit einem sich radial zur Hülse erstreckendem Kragen. Der Kragen des Klemmelementes 13 weist entsprechende Öffnungen auf, durch die Schrauben 14 geführt sind und den Kragen des Klemmelementes 13 an der Sonotrodenplatte 1 befestigen. Die Hülse selbst befindet sich größtenteils innerhalb der Öffnung in der Sonotrodenplatte 1 und stellt eine Anschlagsfläche für die Sonotrode 8 bzw. den Bund 10 der Sonotrode zur Verfügung. In der dargestellten Position des Klemmelementes 13 kann die Sonotrode relativ zur Sonotrodenplatte 1 in Richtung der Matrizenplatte 2 nicht bewegt werden, da dies durch die korrespondierenden Konusse 11, 12 verhindert wird. Eine Relativbewegung der Sonotrode 8 in die umgekehrte Richtung wird hingegen durch die Anlage am Klemmelement 13 verhindert. Im Ergebnis bewirkt das Klemmelement 13 nicht nur ein Klemmen der Sonotrode, sondern auch eine Kraftübertragung auf die Sonotrode 8.

Die Matrizenplatte 2 weist in gleicher Weise eine Öffnung mit konischer Innenfläche 17 auf. Aufgenommen in dieser Öffnung ist die Matrize 5, welche eine konische Außenfläche 18 hat. Auch hier sind die konische Außenfläche 18 der Matrize 5 und die konische Innenfläche 17 der Matrizenplatte 2 korrespondierend zueinander ausgeführt. Die Matrize 5 weist eine Öffnung 15 auf, deren Innenkontur zumindest abschnittsweise in etwa der Außenkontur der Sonotrode 8 entspricht. Des Weiteren ist ein Bandführungselement 6 vorgesehen, welches mit Schrauben 7 an der Matrizenplatte 2 befestigt ist. Das Bandführungselement 6 weist eine Öffnung 16 auf, die mit der Öffnung 15 in der Matrize fluchtet. Zwischen dem Bandführungselement 6 und der Matrizenplatte 2 wird ein Spalt 19 gebildet, durch den das bandförmige Stanzgut geführt werden kann. Alternativ dazu kann das Bandführungselement beweglich ausgebildet sein, so dass es zwischen einer Klemmposition, in der das Bandführungselement das Band an der Matrize und/oder der Matrizenplatte einklemmt, und einer Führungsposition, in der das Band zwischen Bandführungselement und Matrize und/oder Matrizenplatte beweglich geführt wird. Bei der gezeigten Ausführungsform tritt das Bandfürungselement abschnittsweis mit der Matrize in Kontakt und klemmt diese innerhalb der Matrizenplatte fest. Das Bandführungselement fungiert somit auch als Matrizenklemmelement.

Bei der gezeigten Ausführungsform kann nun die Sonotrodenplatte 1 über die Säulenführung entlang der Führungssäulen 3 relativ zur Matrizenplatte 2 bewegt werden mit der Folge, dass die Frontfläche der Sonotrode 8, die als Stempel dient, in die Öffnung 15 der Matrize 5 eingeführt wird. Befindet sich Stanzgut in dem Spalt 19 zwischen Matrize 5 und Bandführung 6, so wird ein Stanzling in Größe der Stirnfläche der Sonotrode 8 aus dem Band ausgestanzt und durch die Öffnung 15 nach unten transportiert, um im nächsten Bearbeitungsschritt mit dem Rohprodukt mittels Ultraschall verschweißt zu werden. Um einen zuverlässigen Transport des Stanzlinges durch die Öffnung 15 in der Matrize sicherzustellen, weist die Sonotrode 8 einen Kanal 9 auf, der mit einem Vakuum oder mit einer Druckluftquelle verbunden werden kann, sodass der Stanzling an die Stirnfläche der Sonotrode gesaugt oder von dieser abgestoßen werden kann. In einer bevorzugten Ausführungsform wird die Sonotrode nur während des Siegelprozesses, nicht aber während des Stanzprozesses mit Ultraschall angeregt. In einer alternativen Ausführungsform erfolgt jedoch die Ultraschallanregung auch während des Stanzprozesses.

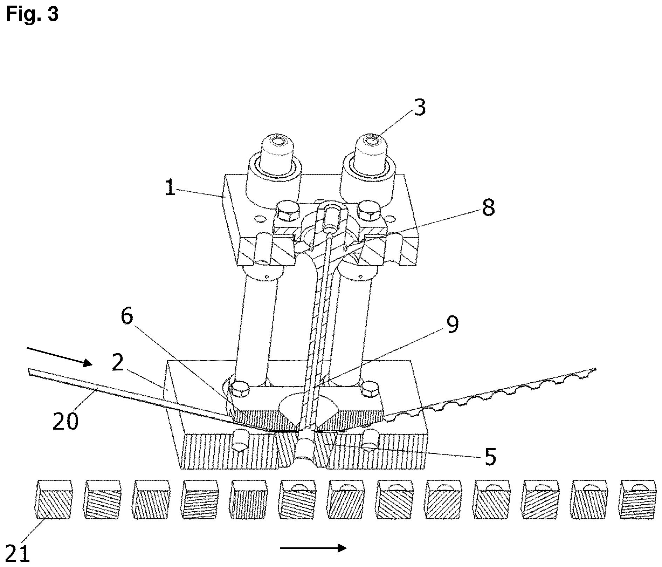

In Figur 3 ist eine perspektivische Schnittansicht gezeigt, wobei hier jetzt zusätzlich noch das bandförmige Stanzgut sowie das Rohprodukt dargestellt ist. Bei der Bewegung der Sonotrodenplatte 1 in Richtung der Matrizenplatte 2 wird die Sonotrode 8 durch das Bandführungselement 6 hindurch bewegt, sodass der Stanzling, z.B. eine Membran aus dem Band 20 ausgestanzt wird. Aufgrund des Kanals 9 kann nun die Stirnfläche den Stanzling ansaugen, bis die Sonotrode die Öffnung 15 durchwandert hat und der Stanzling auf dem bereitgestellten Rohprodukt 21 zu liegen kommt. In dieser Position wird die Sonotrode 8 mit einer Ultraschallschwingung beaufschlagt, sodass der Stanzling mit dem Rohprodukt 21 verschweißt wird. Die Verbindung zur Vakuumquelle wird geschlossen und ggf. der Kanal 9 mit einem Fluid wie z.B. Druckluft beaufschlagt und die Sonotrodenplatte 1 wieder von der Matrizenplatte 2 weg bewegt. Danach werden sowohl das bandförmige Stanzgut 20 als auch die Reihe der Rohprodukte 21 weiter bewegt und ein neuer Stanzsiegelvorgang beginnt.

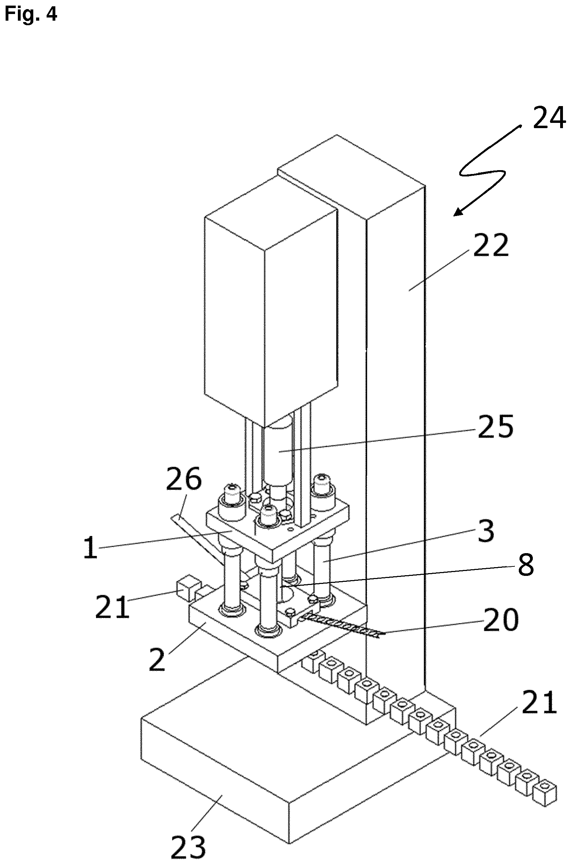

In Figur 4 ist eine entsprechende Ultraschallbearbeitungseinrichtung mit einer entsprechenden Stanzsiegeleinheit gezeigt. Die Einheit weist einen Gerätefuß 23 auf, an dem ein entsprechendes Gerätegestell 22 montiert ist. Die Matrizenplatte 2 ist am Gestell 22 befestigt. Alternativ könnte die Matrizenplatte am Gerätefuß 23 befestigt sein. Eine Antriebseinheit 24 ist vorgesehen, die an der Sonotrodenplatte 1 angreift und diese über die Führungssäulen 3 relativ zur Matrizenplatte 2 bewegen kann. Zum Beaufschlagen der Sonotrode 8 mit einer Ultraschallschwingung ist ein Konverter 25 vorgesehen. Die Sonotrode 8 kann auch mit einem Amplitudentransformator ausgestattet sein. In diesem Fall kann der Bund auch an dem den Amplitudentransformator bildenden Abschnitt der Sonotrode angeordnet sein.

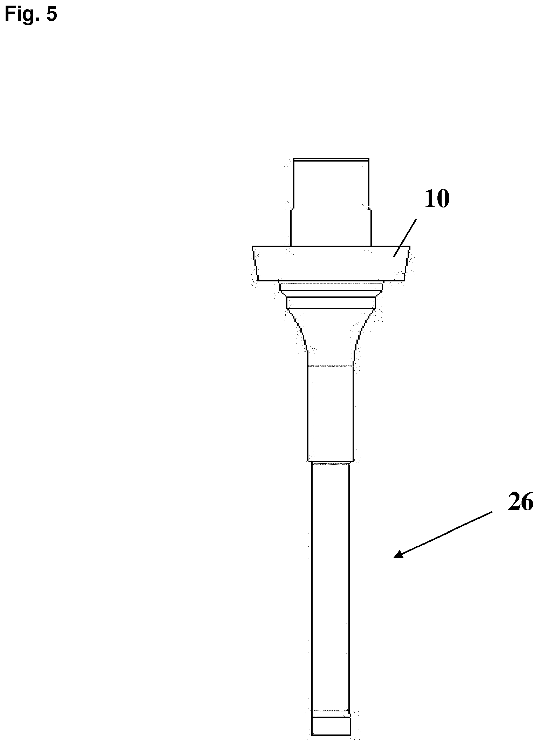

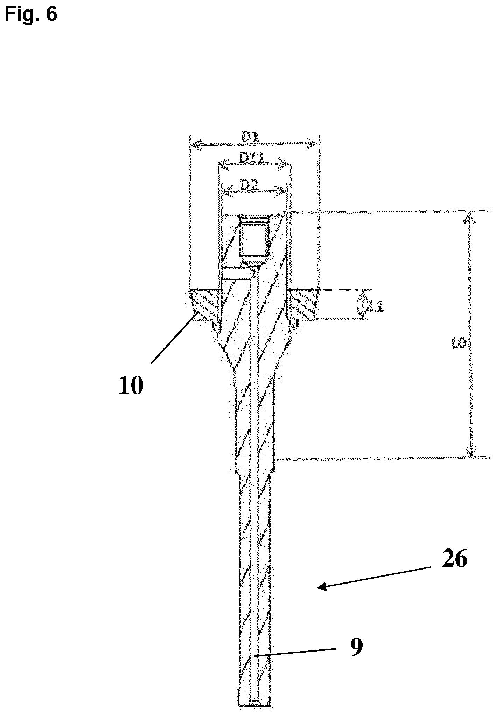

In den Figuren 5 und 6 ist eine alternative Ausführungsform einer Sonotrode 26 dargestellt. Diese Sonotrode 26 unterscheidet sich von der in den vorherigen Figuren dargestellten Sonotrode dadurch, dass der Sonotrodenbund 10 nicht einstückig mit der Sonotrode 26 ausgebildet ist, sondern auf diese aufgeschrumpft ist. Alternativ könnte der Sonotrodenbund 10 auch an die Sonotrode angeschweißt oder angelötet sein.

Für alle Ausführungsformen gelten die folgenden bevorzugten Abmessungen. Der Außendurchmesser des Bundes ist mit D1 und der Innendurchmesser des Bundes ist mit D11 bezeichnet. Der Konuswinkel des Bundes und der Innenfläche der Sonotrodenplattenöffnung liegt vorzugsweise zwischen 5° und 30° und am besten bei etwa 10°. Mit L0 ist die halbe Wellenlänge der Ultraschallschwingung bezeichnet. Die gesamte Sonotrode hat somit eine Länge, die einer vollen Wellenlänge der resonanten Ultraschallschwingung entspricht. Die Dicke des Bundes (Klemmflächenhöhe) ist mit L1 bezeichnet und beträgt vorzugsweise mindestens L0/20 und höchstens L0/2. Am besten wird die Dicke des Bundes zu L0/10 (Ein Zehntel der halben Wellenlänge) gewählt. Die Klemmflächenhöhe darf nicht zu klein gewählt werden, um eine zentrierende Aufnahme in der Sonotrodenplatte zu gewährleisten.

In einer alternativen Ausführungsform hat die Sonotrode nur eine Länge, die einer halben Wellenlänge der resonanten Ultraschallschwingung entspricht. Alle anderen genannten, bevorzugten Abmessungen gelten auch für die kürzere Ausführung der Sonotrode.

In einer weiteren Ausführungsform ist vorgesehen, dass der Sonotrodenbund 10 in die Öffnung der Sonotrodenplatte eingeschrumpft wird.

Zur Durchführung des Stanz-Siegelvorgangs wird zunächst das Band 20 innerhalb des Bandführungselementes 6 positioniert. Die Sonotrode 8 ist zunächst in einer Grundposition, in der der Stempel oberhalb des Bandes positioniert ist. Nun wird der Kanal 9 mit einer Vakuumquelle verbunden und die Sonotrode nach unten bewegt, so dass sich die Sonotrodenspitze durch die Matrize hindurchbewegt und einen Stanzling aus dem Band stanzt. Dadurch, das am Kanal 9 Vakuum anliegt, wird der Stanzling an der Sonotrode gehalten und in die Nähe des unversiegelten Rohproduktes bewegt. Diese Bewegung wird auch als Stanzhub bezeichnet. Unmittelbar bevor und spätestens wenn der Stanzling das Rohprodukt 21 berührt wird die Sonotrode mit Ultraschall beaufschlagt. Die schwingende Sonotrode 8 wird während des sich anschließenden Siegelvorgangs etwas in Richtung des Rohproduktes 21 bewegt, um eine Schweißkraft auf den Stanzling auszuüben. Diese Bewegung wird auch als Schweißhub bezeichnet. Während des Siegelvorgangs kann die Verbindung zwischen Kanal und Vakuumquelle getrennt werden.

Sobald der Siegelvorgang beendet ist, wird die Sonotrode wieder nach oben in ihre Grundposition bewegt und das Band 20 innerhalb des Bandführungselementes weiterbewegt. Danach kann sich der nächste Stanz-Siegelvorgang anschließen.

### BEZUGSZEICHEN

- 1: Sonotrodenplatte
- 2: Matrizenplatte
- 3: Führungssäule
- 4: Führungshülse
- 5: Matrize
- 6: Bandführungselement
- 7: Schrauben
- 8: Sonotrode
- 9: Kanal
- 10: Sonotrodenbund
- 11: konische Innenfläche
- 12: konische Außenfläche
- 13: Klemmelement
- 14: Schrauben
- 15: Öffnung
- 16: Öffnung
- 17: konische Innenfläche
- 18: konische Außenfläche
- 19: Spalt
- 20: Band
- 21: Rohrprodukt
- 22: Gerätegestell
- 23: Gerätefuß
- 24: Stanz-Siegel-Einheit
- 25: Konverter
- 26: Sonotrode

## Patentansprüche

1. Stanz-Siegel-Einheit mit einem als Sonotrode (8) ausgebildeten Stempel und einer Matrize (5), wobei die Matrize (5) eine Öffnung (15) aufweist und der Stempel in Stanzrichtung in die Öffnung (15) hinein- und aus dieser herausbewegbar ist, **dadurch gekennzeichnet, dass** eine Sonotrodenplatte (1) mit einer Sonotrodenplattenöffnung zur Aufnahme der Sonotrode vorgesehen ist, wobei die Sonotrode (8) einen Bund (10) aufweist, und die Sonotrodenplattenöffnung eine Innenkontur mit einer Anschlagsfläche und der Bund eine Außenkontur mit einer Anschlagsfläche hat, wobei die beiden Anschlagsflächen korrespondierend zueinander ausgebildet sind, so dass, wenn die Sonotrode in der Sonotrodenplattenöffnung aufgenommen ist, die Anschlagsflächen aneinander anliegen, wobei die Innenkontur einen Innenkonus und die Außenkontur einen Außenkonus, welcher korrespondierend zu dem Innenkonus ausgebildet ist, aufweist.

2. Stanz-Siegel-Einheit nach Anspruch 1, **dadurch gekennzeichnet, dass** der Bund umlaufend ausgeführt ist.

3. Stanz-Siegel-Einheit nach Anspruch 1 oder 2, **dadurch gekennzeichnet, dass** ein Klemmelement (13) vorgesehen ist, welches sowohl mit der Sonotrodenplatte (1) als auch dem Bund in Kontakt tritt und derart angeordnet ist, dass es eine lineare Relativbewegung zwischen Bund und Sonotrodenplatte (1) verhindert, wobei vorzugsweise das Klemmelement (13) aus einer Hülse mit Kragenelement besteht, wobei die Hülse innerhalb der Sonotrodenplattenöffnung positioniert ist und das Kragenelement an der Sonotrodenplatte (1) vorzugsweise mit Hilfe von einer oder mehreren Schrauben (7, 14) befestigt ist.

4. Stanz-Siegel-Einheit nach einem der Ansprüche 1 bis 3, **dadurch gekennzeichnet, dass** die Matrize (5) an einer Matrizenplatte (2) befestigt ist und die Matrizenplatte (2) eine Matrizenplattenöffnung aufweist, in die die Matrize (5) eingesetzt ist.

5. Stanz-Siegel-Einheit nach Anspruch 4, **dadurch gekennzeichnet, dass** die Matrizenplattenöffnung eine Innenkontur und die Matrize einen Außenkontur hat, wobei die Außenkontur der Matrize und die Innenkontur der Matrizenplatte korrespondierend zueinander ausgeführt sind, wobei vorzugsweise die Innenkontur der Matrizenplatte einen Innenkonus und die Außenkontur der Matrize (5) einen Außenkonus aufweist, wobei der Außenkonus der Matrize (5) korrespondierend zu dem Innenkonus der Matrizenplattenöffnung ausgebildet ist.

6. Stanz-Siegel-Einheit nach Anspruch 5, **dadurch gekennzeichnet, dass** eine Matrizenklemmeinheit vorgesehen ist, welche an der Matrizenplatte (2) vorzugsweise mit einer oder mehreren Schrauben (7, 14) befestigt ist und zumindest abschnittsweise mit der Matrize (5) in Kontakt steht.

7. Stanz-Siegel-Einheit nach Anspruch 6, **dadurch gekennzeichnet, dass** die Matrizenklemmeinheit eine Öffnung (15, 16) aufweist, die mit der Matrizenöffnung fluchtet, wobei vorzugsweise zwischen Matrizenklemmeinheit und Matrize (5) abschnittsweise ein Spalt (19) zur Zuführung von Stanzgut gebildet wird.

8. Stanz-Siegel-Einheit nach einem der Ansprüche 5 bis 6, **dadurch gekennzeichnet, dass** die Innenkonen der Sonotrodenplatte (1) und der Matrizenplatte (2) sowie die Außenkonen von Sonotrodenbund (10) und Matrize (5) jeweils den gleichen Konuswinkel aufweisen.

9. Stanz-Siegel-Einheit nach einem der Ansprüche 1 bis 8, **dadurch gekennzeichnet, dass** die Sonotrodenplatte über eine Geradführung mit der Matrize (5) oder der Matrizenplatte (2), an der die Matrize (5) befestigt ist, verbunden ist, wobei vorzugsweise die Geradführung eine Säulenführung ist.

10. Stanz-Siegel-Einheit nach Anspruch 9, **dadurch gekennzeichnet, dass** die Geradführung eine Säulenführung ist und mindestens zwei Säulen aufweist, die mit der Matrizenplatte (2) verschraubt sind, und die Sonotrodenplatte (1) Führungsöffnungen zur Aufnahme der Säulen aufweist, wobei vorzugsweise zwischen den Säulen und den Führungsöffnungen jeweils eine Führungshülse (4) angeordnet ist.

11. Stanz-Siegel-Einheit nach einem der Ansprüche 1 bis 10, **dadurch gekennzeichnet, dass** die Sonotrode (8) einen Fluidkanal mit einem Einlass, der an der der Matrize (5) zugewandten Fläche der Sonotrode (8) angeordnet ist, und einem Auslass, der mit einer Vakuumquelle und/oder Druckluftquelle verbindbar ist.

12. Ultraschallbearbeitungsvorrichtung zum Stanzen von Stanzlingen aus Stanzgut und zum Siegeln der Stanzlinge an Rohprodukte, **dadurch gekennzeichnet, dass** eine Stanz-Siegel-Einheit nach einem der Ansprüche 1 bis 11 vorgesehen ist.

13. Ultraschallbearbeitungsvorrichtung nach Anspruch 12, **dadurch gekennzeichnet, dass** ein Gestell, an welchem die Matrizenplatte (2) befestigt ist, und eine Antriebseinheit, welche an der Sonotrodenplatte (1) angreift und diese relativ zur Matrizenplatte (2) bewegen kann, vorgesehen ist.

14. Ultraschallbearbeitungsvorrichtung nach Anspruch 12 oder 13, **dadurch gekennzeichnet, dass** eine Zuführung von Stanzgut und eine Zuführung von Rohprodukten vorgesehen ist, wobei die Zuführung von Stanzgut und die Zuführung von Rohprodukten auf gegenüberliegenden Seiten der Matrizenplatte (2) angeordnet sind.

## Claims

1. Stamp-sealing unit with a punch formed as a sonotrode (8) and a die (5), wherein the die (5) has an opening (15) and the punch can be moved into and out of the opening (15) in the stamping direction, **characterized in that** a sonotrode plate (1) is provided with a sonotrode plate opening for accommodating the sonotrode, wherein the sonotrode (8) has a flange (10), and the sonotrode plate opening has an inner contour with a stop surface and the flange has an outer contour with a stop surface, wherein the two stop surfaces are formed corresponding to each other with the result that, when the sonotrode is accommodated in the sonotrode plate opening, the stop surfaces lie against each other, wherein the inner contour has an inner cone and the outer contour has an outer cone which is formed corresponding to the inner cone.

2. Stamp-sealing unit according to claim 1, **characterized in that** the flange is designed circumferential.

3. Stamp-sealing unit according to claim 1 or 2, **characterized in that** a clamping element (13) is provided, which comes into contact both with the sonotrode plate (1) and the flange, and is arranged such that it prevents a linear relative movement between flange and sonotrode plate (1), wherein the clamping element (13) preferably consists of a sleeve with a collar element, wherein the sleeve is positioned inside the sonotrode plate opening and the collar element is fastened to the sonotrode plate (1) preferably using one or more screws (7, 14).

4. Stamp-sealing unit according to one of claims 1 to 3, **characterized in that** the die (5) is fastened to a die plate (2) and the die plate (2) has a die plate opening into which the die (5) is inserted.

5. Stamp-sealing unit according to claim 4, **characterized in that** the die plate opening has an inner contour and the die has an outer contour, wherein the outer contour of the die and the inner contour of the die plate are designed corresponding to each other, wherein the inner contour of the die plate preferably has an inner cone and the outer contour of the die (5) has an outer cone, wherein the outer cone of the die (5) is formed corresponding to the inner cone of the die plate opening.

6. Stamp-sealing unit according to claim 5, **characterized in that** a die clamping unit is provided, which is preferably fastened to the die plate (2) with one or more screws (7, 14) and is in contact, at least in sections, with the die (5).

7. Stamp-sealing unit according to claim 6, **characterized in that** the die clamping unit has an opening (15, 16) which is flush with the die opening, wherein, preferably between die clamping unit and die (5), a gap (19) is formed in sections, for feeding in stamping material.

8. Stamp-sealing unit according to one of claims 5 to 6, **characterized in that** the inner cones of the sonotrode plate (1) and the die plate (2) as well as the outer cones of sonotrode flange (10) and die (5) have the same cone angle in each case.

9. Stamp-sealing unit according to one of claims 1 to 8, **characterized in that** the sonotrode plate is connected, via a straight guide, to the die (5) or the die plate (2) to which the die (5) is fastened, wherein the straight guide is preferably a column guide.

10. Stamp-sealing unit according to claim 9, **characterized in that** the straight guide is a column guide and has at least two columns which are screwed to the die plate (2), and the sonotrode plate (1) has guide openings for accommodating the columns, wherein a guide sleeve (4) is preferably arranged between the columns and the guide openings in each case.

11. Stamp-sealing unit according to one of claims 1 to 10, **characterized in that** the sonotrode (8) has a fluid channel with an inlet which is arranged on the surface of the sonotrode (8) facing the die (5), and an outlet which can be connected to a vacuum source and/or compressed air source.

12. Ultrasonic processing device for stamping stamped parts out of stamping material and for sealing the stamped parts to unprocessed products, **characterized in that** a stamp-sealing unit according to one of claims 1 to 11 is provided.

13. Ultrasonic processing device according to claim 12, **characterized in that** a frame to which the die plate (2) is fastened, and a drive unit which engages on the sonotrode plate (1) and can move the latter relative to the die plate (2) are provided.

14. Ultrasonic processing device according to claim 12 or 13, **characterized in that** a feed of stamping material and a feed of unprocessed products are provided, wherein the feed of stamping material and the feed of unprocessed products are arranged on opposite sides of the die plate (2).

## Revendications

1. Unité d'estampage-scellement avec un poinçon configuré comme sonotrode (8) et une matrice (5), la matrice (5) comprenant une ouverture (15) et le poinçon étant adapté pour pouvoir être déplacé jusque dans cette dernière et pour en sortir, **caractérisée en ce qu'**il est prévu une plaque de sonotrode (1) comportant une ouverture de plaque de sonotrode pour recevoir la sonotrode, la sonotrode (8) comprenant une collerette (10) et l'ouverture de plaque de sonotrode présentant un contour intérieur avec une surface de butée et la collerette ayant un contour extérieur avec une surface de butée, les deux surfaces de butée étant formées de façon à correspondre l'une à l'autre, de sorte que, lorsque la sonotrode est reçue dans l'ouverture de plaque de sonotrode, les surfaces de butée reposent l'une sur l'autre, le contour intérieur présentant un cône intérieur et le contour extérieur présentant un cône extérieur qui est formé de manière à correspondre au cône intérieur.

2. Unité d'estampage-scellement selon la revendication 1, **caractérisée en ce que** la collerette est formée de façon périphérique.

3. Unité d'estampage-scellement selon la revendication 1 ou 2, **caractérisée en ce qu'**il est prévu un élément de serrage (13) qui entre en contact aussi bien avec la plaque de sonotrode (1) qu'avec la collerette et qui est disposé de façon à empêcher un mouvement relatif linéaire entre la collerette et la plaque de sonotrode (1), l'élément de serrage (13) étant constitué de préférence par une douille ayant un élément de collerette, la douille étant positionnée à l'intérieur de l'ouverture de plaque de sonotrode et l'élément de collerette étant fixé sur la plaque de sonotrode (1) de préférence à l'aide d'une ou de plusieurs vis (7, 14).

4. Unité d'estampage-scellement selon l'une des revendications 1 à 3, **caractérisée en ce que** la matrice (5) est fixée sur une plaque de matrice (2) et la plaque de matrice (2) comprend une ouverture de plaque de matrice dans laquelle la matrice (5) est insérée.

5. Unité d'estampage-scellement selon la revendication 4, **caractérisée en ce que** l'ouverture de plaque de matrice présente un contour intérieur et la matrice présente un contour extérieur, le contour extérieur de la matrice et le contour intérieur de la plaque de matrice étant réalisés de manière à correspondre l'un à l'autre, de préférence, le contour intérieur de la plaque de matrice présente un cône intérieur et le contour extérieur de la matrice (5) présente un cône extérieur, le cône extérieur de la matrice (5) étant formé de manière à correspondre au cône intérieur de l'ouverture de plaque de matrice.

6. Unité d'estampage-scellement selon la revendication 5, **caractérisée en ce qu'**il est prévu une unité de serrage de matrice qui est fixée sur la plaque de matrice (2), de préférence avec une ou plusieurs vis (7, 14), et qui est, au moins par zones, en contact avec la matrice (5).

7. Unité d'estampage-scellement selon la revendication 6, **caractérisée en ce que** l'unité de serrage de matrice comprend une ouverture (15, 16) alignée sur l'ouverture de matrice, une fente (19) étant formée par zones, de préférence entre l'unité de serrage de matrice et la matrice (5), pour l'acheminement de matière à estamper.

8. Unité d'estampage-scellement selon l'une des revendications 5 à 6, **caractérisée en ce que** les cônes intérieurs de la plaque de sonotrode (1) et de la plaque de matrice (2) ainsi que les cônes extérieurs de la collerette de sonotrode (10) et de la matrice (5) présentent chacun le même angle de cône.

9. Unité d'estampage-scellement selon l'une des revendications 1 à 8, **caractérisée en ce que** la plaque de sonotrode est fixée sur la matrice (5) ou sur la plaque de matrice (2) sur laquelle la matrice (5) est fixée, à l'aide d'un guidage droit, le guidage droit étant, de préférence, un guidage à colonnes.

10. Unité d'estampage-scellement selon la revendication 9, **caractérisée en ce que** le guidage droit est un guidage à colonnes et comprend au moins deux colonnes qui sont vissées sur la plaque de matrice (2) et que la plaque de sonotrode (1) comprend des ouvertures de guidage pour recevoir les colonnes, de préférence, entre les colonnes et les ouvertures de guidage une douille de guidage (4) étant disposées respectivement.

11. Unité d'estampage-scellement selon l'une des revendications 1 à 10, **caractérisée en ce que** la sonotrode (8) comprend un canal de fluide ayant une entrée qui est disposée sur la surface de la sonotrode (8) orientée vers la matrice (5) et une sortie adaptée à être reliée à une source de vide et/ou une source d'air comprimé.

12. Dispositif d'usinage par ultrasons pour estamper des pièces estampées à partir de matière à estamper et pour sceller les pièces estampées sur des produits bruts, **caractérisé en ce qu'**il est prévu une unité d'estampage-scellement selon l'une des revendications 1 à 11.

13. Dispositif d'usinage par ultrasons selon la revendication 12, **caractérisée en ce qu'**il est prévu un châssis sur lequel la plaque de matrice (2) est fixée, et une unité d'entraînement qui saisit la plaque de sonotrode (1) et qui est adaptée pour pouvoir déplacer celle-ci par rapport à la plaque de matrice (2).

14. Dispositif d'usinage par ultrasons selon la revendication 12 ou 13, **caractérisée en ce qu'**il est prévu un acheminement de matière à estamper et un acheminement de produits bruts, l'acheminement de matière à estamper et l'acheminement de produits bruts étant disposés sur des côtés opposés de la plaque de matrice (2).
